(19) **Europäisches Patentamt / European Patent Office / Office européen des brevets**

(11) **EP 4 645 015 A1**

(12) **EUROPEAN PATENT APPLICATION**
published in accordance with Art. 153(4) EPC

(43) Date of publication:
**05.11.2025 Bulletin 2025/45**

(21) Application number: **23910937.4**

(22) Date of filing: **29.12.2023**

(51) International Patent Classification (IPC):
**G05D 1/00** (2024.01)   **A01D 34/00** (2006.01)

(52) Cooperative Patent Classification (CPC):
**A01D 34/00; G05D 1/00**

(86) International application number:
**PCT/CN2023/143260**

(87) International publication number:
**WO 2024/141023 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.12.2022   CN 202211730693**
**25.05.2023   CN 202310602051**

(71) Applicant: **Positec Power Tools (Suzhou) Co., Ltd.**
**Suzhou, Jiangsu 215123 (CN)**

(72) Inventors:
- **LIAN, Hongkui**
  **Suzhou, Jiangsu 215123 (CN)**
- **LIAO, Liangliang**
  **Suzhou, Jiangsu 215123 (CN)**
- **ZHANG, Chuang**
  **Suzhou, Jiangsu 215123 (CN)**
- **GAO, Shilin**
  **Suzhou, Jiangsu 215123 (CN)**

(74) Representative: **Kilburn & Strode LLP**
**Lacon London**
**84 Theobalds Road**
**Holborn**
**London WC1X 8NL (GB)**

(54) **METHOD AND APPARATUS FOR DETERMINING WORKING BOUNDARY OF OPERATION DEVICE, AND STORAGE MEDIUM**

(57)   This application relates to a method, device, and storage medium for determining a working boundary of an operating equipment. The method includes: obtaining an initial virtual boundary of an operating area; obtaining an adjustment vector; adjusting a portion of the initial virtual boundary that meets a preset condition at least according to the adjustment vector; determining the working boundary of the operating equipment according to the adjusted initial virtual boundary. Using this method facilitates establishing highly reliable working boundaries for an operating equipment without a boundary line, thereby effectively mitigating the problem that a collision is prone to occur during boundary-following process of the operating equipment.

obtaining an initial virtual boundary of the operating area — S200

obtaining an adjustment vector — S400

adjusting a portion of the initial virtual boundary that meets a preset condition at least according to the adjustment vector — S600

determining the working boundary of the operating equipment according to the adjusted initial virtual boundary — S800

**FIG. 2**

## Description

## BACKGROUD

### Technical Field

The present application relates to the field of autonomous moving device data processing technology, particularly to a method, device and storage medium for determining a working boundary of an operating equipment.

### Related Art

With the development of science and technology, automatic lawn mowers without a boundary line have gradually become mainstream. However, how to determine highly reliable working boundaries is a common problem faced by various manufacturers.

Currently, there are methods of using portable devices to move along the lawn perimeter to establish the working boundaries for automatic lawn mowers. Although such methods can conveniently obtain virtual boundaries of lawns, there is still a risk of collision with surrounding objects when the automatic lawn mowers work along the virtual boundaries, indicating that the reliability of such virtual boundaries is not high.

### SUMMARY

The present application provides a method, device and storage medium for determining a working boundary of an operating equipment, to determine a more reliable working boundary for automatic lawn mowers without a boundary line. The technical solutions of the present application include the following.

According to a first aspect of embodiments of the present application, a method for determining a working boundary of an operating equipment is provided, wherein the operating equipment is adapted to perform at least one work task in an operating area, wherein the method includes:

> obtaining an initial virtual boundary of the operating area; wherein the initial virtual boundary is generated from position data collected by a position information collection device moving along an operation boundary of the operating area, and there is a first vertical distance between a positioning device on the position information collection device and a portion closest to a boundary of the position information collection device during a boundary-following process;

> obtaining an adjustment vector; wherein the adjustment vector points toward the interior of the operating area, and there is a second vertical distance between a positioning device on the operating equipment and the portion closest to a boundary of the operating equipment during the boundary-following process, and an adjustment magnitude of the adjustment vector is greater than or equal to an absolute value of a difference between the second vertical distance and the first vertical distance;

> adjusting a portion of the initial virtual boundary that meets a preset condition at least according to the adjustment vector;

> determining the working boundary of the operating equipment according to the adjusted initial virtual boundary.

In one embodiment, the adjusting a portion of the initial virtual boundary that meets a preset condition at least according to the adjustment vector includes: obtaining a marked initial virtual boundary of the initial virtual boundary; wherein the marked initial virtual boundary is at least used to indicate an initial virtual boundary with a collision risk; adjusting the marked initial virtual boundary at least according to the adjustment vector.

In one embodiment, the adjustment vector is pre-stored in a memory, wherein the obtaining the adjustment vector for the initial virtual boundary includes: retrieving the adjustment vector for the initial virtual boundary from the memory.

In one embodiment, the memory is set in one or more of the following devices: the position information collection device, the operating equipment, a terminal device, a cloud server.

In one embodiment, the first vertical distance is determined at least based on a first installation position of the positioning device on the position information collection device and a width of the position information collection device; the second vertical distance is determined at least based on a second installation position of the positioning device on the operating equipment and a width of the operating equipment.

In one embodiment, the first installation position is located on a longitudinal center symmetry plane of the position information collection device, the second installation position is located on a longitudinal center symmetry plane of the operating equipment, and the adjustment vector is determined at least based on a width difference between the position information collection device and the operating equipment.

In one embodiment, the obtaining the adjustment vector for the initial virtual boundary includes: obtaining a first width of the position information collection device and a second width of the operating equipment; determining the first vertical distance according to the first installation position and the first width; determining the second vertical distance according to the second installation position and the second width; determining the adjustment magnitude of the adjustment vector according to the first vertical distance and the second vertical distance.

In one embodiment, the adjusting a portion of the initial virtual boundary that meets a preset condition at least according to the adjustment vector includes: obtaining a portion of the initial virtual boundary where a satellite positioning signal output by the positioning device on the position information collection device during the boundary-following process fails to satisfy a quality condition; obtaining a shadow area compensation vector for the portion of the initial virtual boundary; wherein the shadow area compensation vector points toward the interior of the operating area; determining the working boundary of the operating equipment corresponding to the portion of the initial virtual boundary according to the initial virtual boundary, the adjustment vector, and the shadow area compensation vector.

In one embodiment, a compensation magnitude of the shadow area compensation vector is determined at least based on a positioning deviation amount of the positioning device on the operating equipment in a shadow area.

In one embodiment, the adjustment magnitude is determined at least based on the following relation:

$$d_2 - d_1 \leq |D_{in}| \leq L - d_3 + (d_2 - d_1);$$

wherein $|D_{in}|$ represents the adjustment magnitude, $d_1$ represents the first vertical distance, $d_2$ represents the second vertical distance, $d_3$ represents a third vertical distance between an outermost edge of an operating tool of the operating equipment and the portion closest to a boundary of the operating equipment during the boundary-following process, L represents a grass-leaving width threshold at the operation boundary.

According to a second aspect of the present application, a method for determining a working boundary of an operating equipment is also provided, wherein the operating equipment is adapted to perform at least one work task in an operating area, and the operating equipment is provided with a detachable positioning device, the positioning device is configured to be coupled with another mobile device in a detached state to move and collect position data of an operation boundary of the operating area, wherein the method includes:

obtaining an initial virtual boundary of the operating area; wherein the initial virtual boundary is generated from the collected position data of the operation boundary of the operating area, and during a collection process, there is a first vertical distance between the positioning device and a portion closest to a boundary of the mobile device;

obtaining an adjustment vector; wherein the adjustment vector points toward the interior of the operating area, and there is a second vertical distance between the positioning device on the operating equipment and a portion closest to a boundary of the operating equipment during a boundary-following process, and an adjustment magnitude of the adjustment vector is greater than or equal to an absolute value of a difference between the second vertical distance and the first vertical distance;

adjusting a portion of the initial virtual boundary that meets a preset condition at least according to the adjustment vector;

determining the working boundary of the operating equipment according to the adjusted initial virtual boundary.

According to a third aspect of the present application, a device for determining a working boundary of an operating equipment is also provided, the device includes:

a first obtaining module, configured to obtain an initial virtual boundary of the operating area; wherein the initial virtual boundary is generated from position data collected by a position information collection device moving along an operation boundary of the operating area, and there is a first vertical distance between a positioning device on the position information collection device and a portion closest to a boundary of the position information collection device during a boundary-following process;

a second obtaining module, configured to obtain an adjustment vector; wherein the adjustment vector points toward the interior of the operating area, and there is a second vertical distance between a positioning device on the operating equipment and a portion closest to a boundary of the operating equipment during the boundary-following process, and an adjustment magnitude of the adjustment vector is greater than or equal to an absolute value of a difference between the second vertical distance and the first vertical distance;

a boundary determining module, configured to adjust a portion of the initial virtual boundary that meets a preset condition at least according to the adjustment vector, to determine the working boundary of the operating equipment according to the adjusted initial virtual boundary.

According to a fourth aspect of the present application, a computing device is also provided, including a memory and a processor, wherein the memory stores a computer program, and when the processor executes the computer program, the method according to any embodiment of the present application is implemented.

According to a fifth aspect of the present application, a computer-readable storage medium is also provided, wherein when instructions in the storage medium are executed by a processor of an electronic device, the electronic device is enabled to execute the method according to any embodiment of the present application.

According to a sixth aspect of the present application, a computer program product is also provided, including a computer program, wherein when the computer program is executed by a processor, steps of the above method embodiments are implemented.

According to a seventh aspect of the present application, an automatic working system is also provided, including: a mapping device and an operating equipment,

the mapping device, configured to record a movement trajectory while moving along an operation boundary of an operating area, for generating a working boundary of the operating equipment; wherein the mapping device includes wheels;

the operating equipment, configured to process a surface of the operating area along the working boundary; wherein during a movement along the working boundary, an outer side of a wheel closest to a boundary of the operating equipment is substantially flush with an outer side of a wheel closest to a boundary of the mapping device when the movement trajectory is recorded.

The technical solution provided by the embodiments of the present application can effectively improve the problem of collision tendency during the boundary-following process of the operating equipment by adjusting the initial virtual boundary through the adjustment vector, thereby facilitating the establishment of a highly reliable working boundary for an operating equipment without a boundary line.

In the technical solution provided by the embodiments of the present application, during a movement along the operation boundary, by controlling the outer side of the wheel closest to a boundary of the operating equipment to be substantially flush with the outer side of the wheel closest to a boundary of the mapping device when the movement trajectory is recorded, the problem of collision tendency during the boundary-following process of the operating equipment can be effectively improved.

It should be understood that the above general description and the following detailed description are exemplary and explanatory only and are not restrictive of the present application.

**BRIEF DESCRIPTION OF THE DRAWINGS**

To more clearly illustrate the technical solutions in the embodiments of this specification or in the prior art, the drawings needed in the description of the embodiments or the prior art will be briefly introduced below.

Obviously, the drawings described below are only some embodiments of this specification, and for a person skilled in the art, other drawings can be obtained from these drawings without creative effort.

FIG. 1 is a schematic diagram of establishing boundary using a portable device in conventional technology;

FIG. 2 is a flowchart of steps according to an embodiment of the present application;

FIG. 3 is a structural schematic diagram of an operating equipment according to an embodiment of the present application;

FIG. 4 is a structural schematic diagram of a position information collection device according to an embodiment of the present application;

FIG. 5 is a schematic diagram of boundary-following of a position information collection device in one scenario according to an embodiment of the present application;

FIG. 6(a) is a schematic diagram of an operating equipment moving along an initial virtual boundary B1 in the scenario shown in FIG. 5 according to an embodiment of the present application;

FIG. 6(b) is a schematic diagram of an operating equipment moving along an adjusted initial virtual boundary B2 in the scenario shown in FIG. 5 according to an embodiment of the present application;

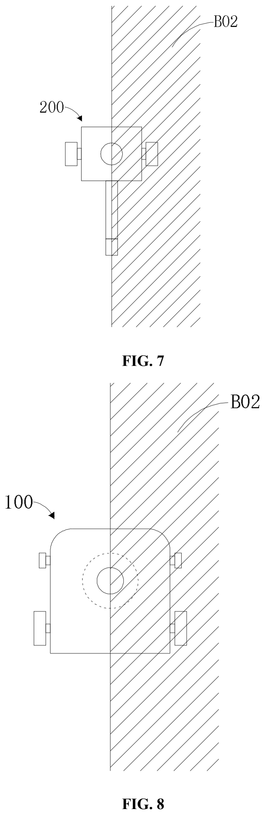

FIG. 7 is a schematic diagram of boundary-following of a position information collection device in another scenario according to an embodiment of the present application;

FIG. 8 is a schematic diagram of boundary-following of an operating equipment in the scenario described in FIG. 7 according to an embodiment of the present application;

FIG. 9 is a composition schematic diagram of a device for determining a working boundary of an operating equipment according to an embodiment of the present application;

FIG. 10 is a composition schematic diagram of a computing device according to an embodiment of the present application;

FIG. 11 is a structural schematic diagram of an automatic working system according to an embodiment of the present application.

The symbols in the figures are represented as following:

B0 - operation boundary, B01 - wall, B02 - road surface, B1 - initial virtual boundary, B2 - working boundary;
d1 - first vertical distance, d2 - second vertical distance, d3 - third vertical distance, H1 - operating equipment width, H2 - position information collection device width;
100 - operating equipment, 110 - body, 120 - drive device, 121 - front wheel group, 122 - rear wheel group, 130 - positioning device, 140 - cutting device;
200 - position information collection device, 210 - body, 220 - drive device, 230 - positioning device, 240 - control device.

## DETAILED DESCRIPTION

To make the above objectives, features and advantages of the present invention more obvious and easier to understand, detailed description of specific embodiments of the present invention will be made with reference to the accompanying drawings. Many specific details are described below to facilitate full understanding of the present invention. However, the present invention can be implemented in many different ways other than those described herein, and those skilled in the art can make similar improvements without departing from the essence of the present invention, therefore the present invention is not limited by the specific embodiments disclosed below.

It should be noted that the width mentioned in this application usually refers to the device space parameter in the direction perpendicular to the traveling direction when the operating equipment or position information collection device is working normally. Here, it can be understood that the length of the operating equipment or position information collection device refers to the device space parameter in the normal forward (backward) direction. It should also be understood that the construction of virtual boundary, working boundary, etc. described in the embodiments of this application is usually processed based on the longitudinal center symmetry plane when the positioning device is on the operating equipment or position information collection device, where the longitudinal direction usually refers to the traveling direction during operation. For example, in a two-dimensional coordinate system, when the operating equipment travels along the X-axis direction, the longitudinal direction is the X-axis direction, and the corresponding transverse direction is the Y-axis direction. For example, here, the width of the operating equipment is its maximum dimension length in the Y-axis direction, and the length of the operating equipment is its maximum dimension length in the X-axis direction.

With the rapid development of technology, intelligent control technology is increasingly widely used in people's lives. Operating equipment with autonomous working capability, as an intelligent product derived from intelligent control technology, can bring convenience and efficiency to people's lives, therefore, autonomous working devices are frequently used in people's lives.

Typically, such operating equipment can refer to a device with automatic driving capability that can perform work tasks during automatic operation. The types of operating equipment can include various kinds, and the embodiments of this application do not limit this. For example, the operating equipment can be an automatic lawn mower, automatic snow sweeper, automatic watering machine, automatic leaf blower, automatic floor sweeper, mopping robot, sweeping and mopping integrated robot, etc. Furthermore, the operating equipment is adapted to perform one or more work tasks within the operating area. For example, when the operating equipment is an automatic lawn mower, it can perform mowing tasks in the operating area; when the operating equipment is an automatic snow sweeper, it can perform snow sweeping tasks in the operating area; when the operating equipment is an automatic watering machine, it can perform watering tasks in the operating area; when the operating equipment is an automatic leaf blower, it can perform leaf blowing tasks in the operating area; when the operating equipment is an automatic floor sweeper, it can perform sweeping tasks in the operating area; when the operating equipment has both cutting components and watering components, it can perform both mowing tasks and watering tasks in the operating area, and so on.

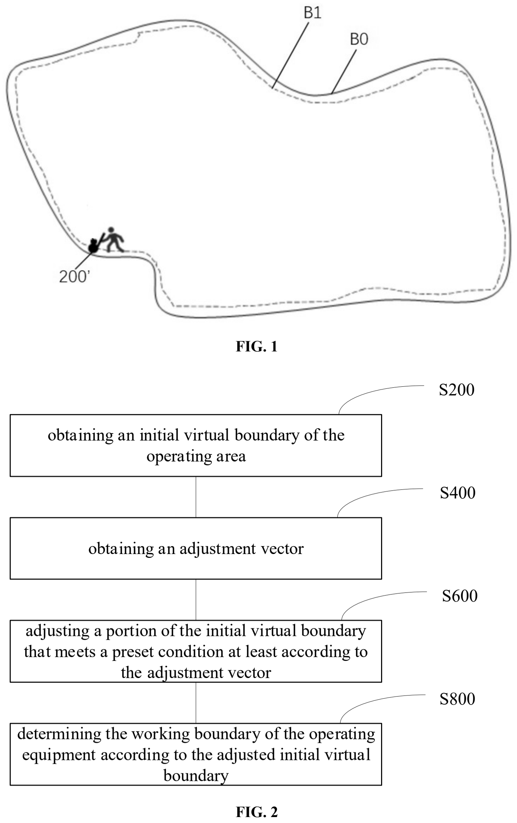

As shown in FIG. 1, when establishing the working boundary of the operating equipment, people can choose to carry a portable device 200' with a positioning device, and obtain position data of the lawn edge B0 by pushing this portable device 200' along the perimeter of the lawn. For example, when there is a wide road surface outside the lawn, the longitudinal center axis of the positioning device can be aligned with the boundary line between the road surface and the lawn while pushing the portable device 200'; for example, when there are walls or fences outside the lawn, the portion closest to a boundary of the portable device 200' during boundary-following can be basically in contact with (but without obvious interaction force) the walls or fences while pushing the portable device 200'; for example, when there is ground with height difference outside the lawn (such as lower steps, pools, etc.), the portion closest to a boundary of the portable device 200' during boundary-following can be basically in contact with the edge of the lawn while pushing the portable device 200'.

However, when the operating equipment works along the virtual boundary formed by the portable device 200', it usually tends to collide with surrounding objects. On the other hand, there are usually many obstacles around the lawn that easily form shadow areas during the boundary-following process, thereby affecting the acquisition of actual boundary position data. If the operating equipment still works along the boundary according to the position data obtained in the shadow area, it would easily collide with surrounding objects due to inaccurate navigation. In addition, when a user controls the portable device to work, they may also record some boundary position data with large deviations. If the operating equipment still works according to these boundary position data, it would also increase the collision risk during the boundary-following process.

Based on the above problems, this application provides a method for determining the working boundary of operating equipment to reduce the collision risk during actual boundary-following process and help an operating equipment without a boundary line determine a more reliable working boundary.

Specifically, the determination method provided in this application is based on the following design principles:

Since the portable device generally used for mapping are usually smaller in size (to facilitate flexible control when a user push), it tends to cause differences in the distance between the positioning device and the boundary during mapping and boundary-following work processes. If the operating equipment still works along the boundary according to the initially established virtual boundary, when the operating equipment similarly moves along walls or fences, it would collide with the walls or fences. On the other hand, for the boundary position data recorded by the portable device in the shadow area, an inward adjustment strategy can be adopted, that is, making the operating equipment move closer to the interior of the lawn to reduce a collision risk. As for the adjustment magnitude, it can be considered that the originally recorded boundary position data in the shadow area also has a collision risk, and thus can reduce the collision risk of moving along the boundary in the shadow area according to the aforementioned inward adjustment magnitude when the operating equipment moves along walls or fences. Similarly, for the deviation data recorded by user control, an inward adjustment strategy can also be adopted. As for the adjustment magnitude, these recorded error data can also be considered to have a collision risk, and thus can reduce the collision risk of moving along these recorded error data according to the aforementioned inward adjustment magnitude when the operating equipment moves along walls or fences.

Thus, by solving the problem of collision tendency when the operating equipment moves along walls or fences based on the virtual boundary established by a portable device, the problems of shadow areas and user operation deviations can also be improved to some extent. Based on the above considerations and further conception, by retracting the original virtual boundary by at least "the difference in distance between the positioning device and the boundary during mapping and boundary-following work processes," the problem of collision when the operating equipment moves along walls or fences based on the virtual boundary established by a portable device can be solved, thereby forming the determination method provided in this application.

It should be noted that the above conception process regarding the invention should also be considered as a contribution of this application.

The following will describe in detail the determination method of various embodiments of this application in combination with the drawings. In the following embodiments, the implementation scheme of this embodiment is explained using an intelligent lawn mower as an example of the operating equipment. Correspondingly, in the following embodiments, the operating area is a lawn, and the operating equipment can be intelligent lawn mowers of different models. Generally, the width of different models of intelligent lawn mowers may vary.

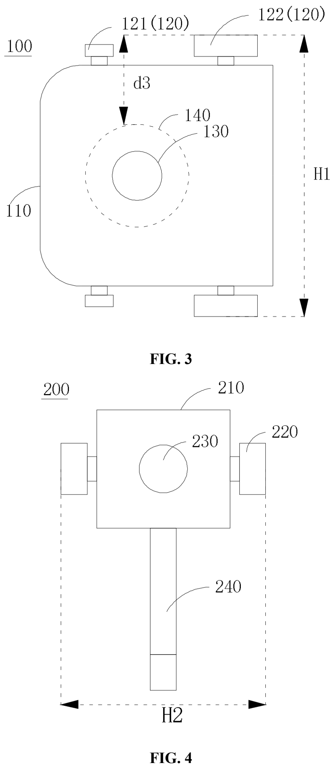

In one embodiment, as shown in FIG. 3, the operating equipment 100 adapted to perform at least one work task in the operating area may include a body 110, and a drive device 120, a positioning device 130, and a cutting device 140 connected to the body 110, and of course includes a control circuit (not shown in the figure) to control the operation of the aforementioned drive device 120, positioning device 130, and cutting device 140.

Optionally, the drive device 120 may include a front wheel group 121 and a rear wheel group 122. As shown in FIG. 3, both the front wheel group 121 and rear wheel group 122 are set on the outside of the body, and the size of the rear wheel group 122 is larger than that of the front wheel group 121, thus the width of the operating equipment 100 can be expressed as the vertical distance H1 between the outermost sides of the two wheels of the rear wheel group 122; of course, the front and rear wheel groups can also be set inside the body 110, in this case, the width of the operating equipment 100 can be expressed as the maximum dimension length of the body 110 in the direction perpendicular to the traveling direction of the operating equipment 100.

Optionally, the cutting device 140 can perform cutting through motor-driven rotation of a long straight blade, or through motor-driven rotation of a blade disc to drive the blade for cutting. Furthermore, the cutting device 140 can be a grass-mulching cutting device or a cutting device with grass collection components, this application does not limit this.

Optionally, the positioning device 130 can be mounted offset or centered to the body 110. Optionally, the positioning device 130 can also be detachably connected to the body 100. On the other hand, the positioning device 130 can obtain coordinate information of its location through absolute positioning or relative positioning methods. Accordingly, the positioning device 130 can include a visual sensor (such as a monocular camera, multi-lens camera, depth camera, etc.), image sensor, satellite positioning sensor, etc. Correspondingly, the positioning device 130 can obtain coordinate information of its location using one or more of the following positioning technologies: GPS technology, Visual Simultaneous Localization And Mapping (VSLAM) technology, Inertial Measurement Unit (IMU) technology, Real-Time Kinematic (RTK) positioning technology, network RTK (NRTK) positioning technology, undifferenced network RTK (URTK) positioning technology, precise point positioning RTK (PPP-RTK) positioning technology, etc.

In this embodiment, the position information collection device 200 is used as a portable device to collect virtual position data of the operation boundary of the operating area for the operating equipment 100. As shown in FIG. 4, the position information collection device includes a body 210, and a drive device 220, positioning device 230, and control device 240 connected to the body 210.

Optionally, the drive device 220 can include a pair of wheel groups (such as universal wheel groups or drive wheel groups) set on the outside of the body, thus the width of the position information collection device 200 can be expressed as the vertical distance H2 between the outermost sides of the two wheels of this wheel group. Of course, this wheel group can also be set inside the body 210, in this case, the width of the position information collection device 200 can be expressed as the maximum dimension length of the body 210 in the direction perpendicular to the traveling direction of the position information collection device 200.

Optionally, the positioning device 230 can refer to the aforementioned positioning device 130 on the operating equipment 100, which will not be repeated here.

Optionally, a user can manually control the position information collection device 200 to move along a boundary through the control device 240, in which case the control device 240 can be structures like handles or push rods. Additionally, a user can also remotely control the position information collection device 200 to move along a boundary through the control device 240, in which case the control device 240 can be structures like antennas.

As shown in FIG. 2, the method for determining the working boundary of the operating equipment in this embodiment may include:

S200 - Obtaining an initial virtual boundary of the operating area; wherein the initial virtual boundary is generated from position data collected by a position information collection device moving along the operation boundary of the operating area, and there is a first vertical distance between the positioning device on the position information collection device and the portion closest to a boundary of the position information collection device during a boundary-following process.

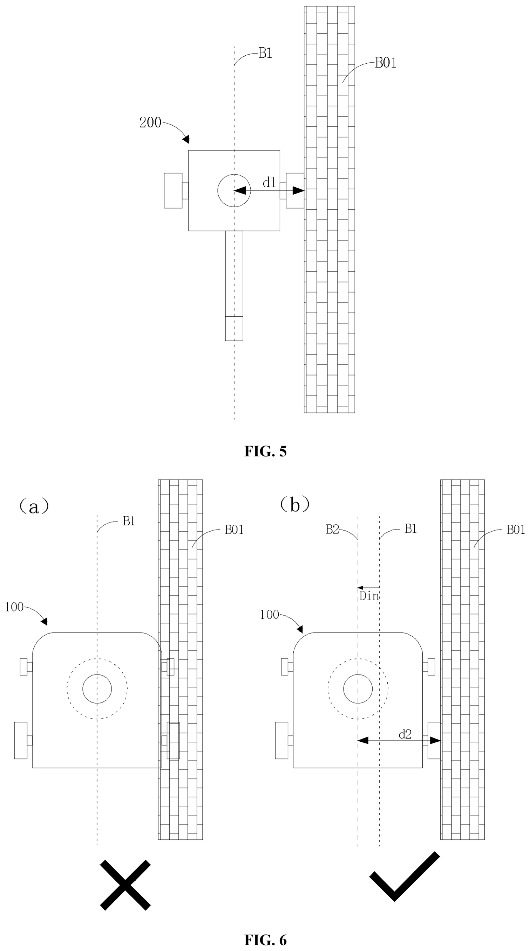

For example, as shown in FIG. 5, when the position information collection device 200 is controlled by a user to move along the wall B01, the position data collected by the position information collection device actually reflects the coordinate data of the location of its positioning device 230. Here, since there is a first vertical distance d1 between the positioning device 230 and the portion closest to a boundary (outer edge of the wheel group on one side of the drive device 220) of the position information collection device 200, thus, there is usually also a distance of d1 between the initial virtual boundary B1 and the wall B01.

S400 - Obtaining an adjustment vector; wherein the adjustment vector points toward the interior of the operating area, and there is a second vertical distance between the positioning device on the operating equipment and the portion closest to a boundary of the operating equipment during the boundary-following process, and the adjustment magnitude of the adjustment vector is greater than or equal to the absolute value of the difference between the second vertical distance and the first vertical distance.

For example, as shown in FIG. 6, since there is a second vertical distance d2 between the positioning device 130 and the portion closest to a boundary of the operating equipment 100 during boundary-following, and as known from the previous introduction about a portable device, d2 is usually greater than d1, thus if the operating equipment 100 still moves along the initial virtual boundary B1, it would lead to collision between the operating equipment 100 and the wall B01 (as shown in FIG. 6(a)). Therefore, the initial virtual boundary B1 can be adjusted through an adjustment vector to reduce a collision risk. As shown in FIG. 6(b), when the initial virtual boundary B1 is adjusted inward by a distance Din to obtain boundary B2, and the operating equipment 100 moves along boundary B2, the distance between the positioning device 130 and wall B01 is greater than or equal to d2, thus the operating equipment 100 can smoothly move along wall B01. Here, distance Din is greater than or equal to the absolute value of the difference between the second vertical distance d2 and the first vertical distance d1.

Optionally, the size difference between the first vertical distance d1 and the second vertical distance d2 can determine the direction of the adjustment vector, and the numerical difference between the first vertical distance d1 and the second vertical distance d2 can determine the magnitude of the adjustment vector. For example, if d1 is 100mm and d2 is 300mm, then d1 is less than d2, so the adjustment vector points toward the interior of the operating area with a magnitude of 200mm; if d1 is 100mm and d2 is 80mm, then d1 is greater than d2, so the adjustment vector can point towards the exterior of the operating area with a magnitude of 20mm; if d1 is 100mm and d2 is also 100mm, then d1 and d2 are consistent, the magnitude of the adjustment vector is 0, and the direction can be arbitrary.

S600 - Adjusting a portion of the initial virtual boundary that meets a preset condition at least according to the adjustment vector.

For example, as shown in FIG.s 7 and 8, when the position information collection device 200 moves along the boundary line between the lawn and wide road surface B02, its formed initial virtual boundary does not need further adjustment, because there are no obstacles like walls or fences near the road surface B02 in this case, and there would be no collision risk when the operating equipment 100 moves along this initial virtual boundary.

For example, when the position information collection device 200 moves along ground with height difference, its formed initial virtual boundary basically also does not need further adjustment.

Thus, it can be known that not all initial virtual boundaries corresponding to operation boundaries of operating areas need adjustment, but rather adjustment is made to a portion of the initial virtual boundary that meets a preset condition, so as to ensure the edge-cutting effect when the operating equipment 100 moves along portions of the initial virtual boundary that do not need adjustment.

Optionally, the portion of initial virtual boundary that meets a preset condition can be an initial virtual boundary with a collision risk (such as an initial virtual boundary corresponding to an operation boundary like wall, fence, etc.), or a portion of initial virtual boundary in a shadow area, or a portion of initial virtual boundary with a large deviation formed when a user controls the position information collection device.

It should be noted that determining whether a portion of initial virtual boundary meet or do not meet a preset condition is not a necessary step of the determination method in various embodiments of this application. In other words, the "portion(s) of initial virtual boundary that meet a preset condition" mentioned in this application is a modificatory limitation on "portion(s) of initial virtual boundary," rather than a limitation on method steps.

For example, in addition to adjusting the initial virtual boundary through the adjustment vector, a set safety distance can also be introduced for adjustment to further improve safety; a compensation vector for a shadow area can also be introduced to further improve the accuracy of a working boundary in a shadow area.

S800 - Determining the working boundary of the operating equipment according to the adjusted initial virtual boundary.

For example, the adjusted initial virtual boundary includes adjusted portion(s) of initial virtual boundary and portion(s) of initial virtual boundary that do not need adjustment. For example, these two parts of initial virtual boundary form the working boundary of the operating equipment after smoothing processing.

The determination method of this embodiment can effectively improve the problem of collision tendency when the operating equipment moves along walls or fences based on a virtual boundary established by a portable device by adjusting the initial virtual boundary inward through the adjustment vector, and can simultaneously improve to some extent the problems of shadow area(s) and user operation deviation(s), thereby facilitating the establishment of highly reliable working boundaries for an operating equipment without a boundary line. On the other hand, the determination method of this embodiment can be applied to form working boundaries for different operating equipment, having better universality. In other words, for different operating equipment, their corresponding working boundaries can all be constructed based on initial virtual boundaries combined with adjustment vectors, without needing to construct working boundaries separately for each operating equipment.

In some implementations of this embodiment, to simplify adjustment settings, adjustments can be defaulted to be made to all initial virtual boundaries. For portion(s) of initial virtual boundary that originally do not need adjustment, position data with deviation can be artificially obtained based on the adjustment vector when acquiring position data of that portion of operation boundary, so that they can be adjusted together to more accurate working boundaries during subsequent unified adjustment.

In another embodiment, the operating equipment is provided with a detachable positioning device, and the positioning device is configured to be coupled with another mobile device in a detached state to move and collect position data of operation boundary of the operating area. Correspondingly, the determination method of this embodiment includes:

S200' - Obtaining an initial virtual boundary of the operating area;

wherein the initial virtual boundary is generated from the collected position data of the operation boundary of the operating area, and during a collection process, there is a first vertical distance between the positioning device and a portion closest to a boundary of the mobile device;

S400' - Obtaining an adjustment vector;

wherein the adjustment vector points toward the interior of the operating area, and there is a second vertical distance between the positioning device on the operating equipment and the portion closest to a boundary of the operating equipment during a boundary-following process, and the adjustment magnitude of the adjustment vector is greater than or equal to the absolute value of the difference between the second vertical distance and the first vertical distance;

S600' - Adjusting a portion of the initial virtual boundary that meets a preset condition at least according to the adjustment vector;

S800' - Determining the working boundary of the operating equipment according to the adjusted initial virtual boundary.

Optionally, the operating equipment in this embodiment has an installation position that can be detachably connected with the positioning device, with other settings consistent with those of operating equipment 100.

Optionally, the mobile device in this embodiment has an installation position that can be detachably connected with the positioning device, with other settings consistent with those of position information collection device 200.

The determination method of this embodiment facilitates improved sharing of the positioning device through the detachable positioning device, and using the same positioning device for both mapping and navigation helps ensure the use of the same coordinate system for mapping and navigation, while also helping reduce the preparation costs of the operating equipment and/or position information collection device.

The following will provide some implementations that can be optionally used in the determination methods in the above embodiments, in combination with the drawings, taking operating equipment 100 and position information collection device 200 as examples.

In some implementations, adjusting a portion of the initial virtual boundary that meets a preset condition at least according to the adjustment vector includes:

S620 - Obtaining a marked initial virtual boundary of the initial virtual boundary; wherein the marked initial virtual boundary is at least used to indicate an initial virtual boundary with a collision risk;

S640 - Adjusting the marked initial virtual boundary at least according to the adjustment vector.

Here, a marked initial virtual boundary can be represented as having a corresponding attribute mark, such as a marked boundary with a fixed obstacle attribute (like wall, fence, step, flower bed, landscape plant, pool, and other island), a marked boundary with a shadow area attribute, a marked boundary with a deviation attribute, etc., all of which can be used to indicate initial virtual boundary with a collision risk. On the other hand, there are also various ways to obtain these marked initial virtual boundaries. For example, a user can manually mark portion(s) of initial virtual boundary that need adjustment based on the actual boundary terrain of the operating area and the displayed initial virtual boundary; for example, the position information collection device 200 can also identify boundary position data that needs adjustment by combining its own sensor component(s) when collecting position data of the operating area boundary, and assign corresponding attribute(s), so that it can automatically mark portions of initial virtual boundary that need adjustment when generating the initial virtual boundary.

It should be noted that the marked initial virtual boundary can also be not set. For example, it can be defaulted that all formed initial virtual boundaries need adjustment, thus eliminating the need to mark initial virtual boundaries that need adjustment. The implementation without marking initial virtual boundaries can refer to the previously mentioned implementation of "adjusting all initial virtual boundaries," which will not be repeated here.

In some implementations, the adjustment vector is pre-stored in a memory, and obtaining the adjustment vector for the initial virtual boundary includes: retrieving the adjustment vector for the initial virtual boundary from the memory.

Optionally, this memory can be a local memory, such as memory in the position information collection device, memory in the operating equipment, memory in a mobile terminal, or it can be mounted in a virtual server through cloud storage technology (for example, in the form of cloud drive).

Optionally, the subject executing initial virtual boundary establishment can be any one of the position information collection device 200, operating equipment 100, mobile terminal, or cloud server.

Optionally, the subject executing initial virtual boundary adjustment can be any one of the position information collection device 200, the operating equipment 100, a mobile terminal, or a cloud server.

Optionally, the subject executing the determination methods mentioned in previous embodiments can be one or more of the position information collection device 200, the operating equipment 100, a mobile terminal, or a cloud server.

In some implementations, the first vertical distance d1 is determined at least based on a first installation position of the positioning device 230 on the position information collection device 200 and a width of the position information collection device 200; the second vertical distance d2 is determined at least based on the second installation position of the positioning device 130 on the operating equipment 100 and a width of the operating equipment 100.

Taking positioning device 230 as an example, assuming its first installation position in the width direction is located at one-third width from the portion closest to a boundary of the position information collection device 200 during boundary-following, the first vertical distance d1 can be known to be one-third of the width H2 of the position information collection device 200 based on the width of the position information collection device 200. Similarly, based on the second installation position of the positioning device 130, combined with the width H1 of the operating equipment 100, the length of the second vertical distance d2 can be known.

In some implementations, as shown in FIG.s 3 and 4, the first installation position is located on a longitudinal center symmetry plane of the position information collection device 200, the second installation position is located on a longitudinal center symmetry plane of the operating equipment 100, thus the adjustment vector can be determined at least based on the width difference between the position information collection device 200 and the operating equipment 100. Through the above settings, it helps simplify the calculation of adjustment vector magnitude, thereby facilitating the adjustment of initial virtual boundary.

In some implementations, obtaining the adjustment vector for the initial virtual boundary includes:

S420 - Obtaining a first width of the position information collection device 200 and a second width of the operating equipment 100;

S440 - Determining the first vertical distance d1 according to the first installation position and the first width;

S460 - Determining the second vertical distance d2 according to the second installation position and the second width;

S480 - Determining the adjustment magnitude of the adjustment vector according to the first vertical distance d1 and the second vertical distance d2.

Through the above method, the adjustment magnitude of the adjustment vector can be automatically calculated by user input of the first width of position information collection device 200 and the second width of operating equipment 100, which is convenient and quick. Optionally, width information can also be sent to the adjustment vector generation device by other devices. Optionally, the adjustment vector generation device can also retrieve width information of position information collection device 200 and operating equipment 100 from memory.

In some implementations, adjusting a portion of the initial virtual boundary that meets a preset condition at least according to the adjustment vector includes:

S610 - Obtaining a portion of initial virtual boundary where a satellite positioning signal output by the positioning device on the position information collection device during the boundary-following process fails to satisfy a quality condition;

S630 - Obtaining a shadow area compensation vector for the portion of the initial virtual boundary; wherein the shadow area compensation vector points toward the interior of the operating area;

S650 - Determining the working boundary of the operating equipment corresponding to the portion of the initial virtual boundary according to the initial virtual boundary, the adjustment vector, and the shadow area compensation vector.

During satellite operation, signal blockage can cause poor signal quality in some boundary-following areas of the position information collection device, resulting in output of inaccurate boundary position data. By introducing the compensation vector(s) for the shadow area(s), boundary position data in shadow area(s) can be effectively corrected, further improving the reliability of the working boundary of the operating equipment 100.

In some implementations, a compensation magnitude of the shadow area compensation vector is determined at least based on a positioning deviation amount of the positioning device 130 on the operating equipment 100 in a shadow area. For example, positioning deviation of the positioning device 130 can be measured in different shadow area environments, and corresponding positioning deviation data can be collected. Through relevant data processing ways (such as one or more of average, root mean square, least squares, etc.), the positioning deviation amount of the positioning device 130 in a shadow area can be obtained.

In some implementations, the adjustment magnitude is determined at least based on the following relation:

$$d_2 - d_1 \leq |D_{in}| \leq L - d_3 + (d_2 - d_1);$$

wherein $|D_{in}|$ represents the adjustment magnitude, $d_1$ represents the first vertical distance, $d_2$ represents the second vertical distance, $d_3$ represents the third vertical distance between the outermost edge of the operating tool of the operating equipment and the portion closest to a boundary of the operating equipment during boundary-following process, L represents the grass-leaving width threshold at the operation boundary.

As shown in FIG. 3, there is a third vertical distance d3 between the outermost edge of the cutting device 140 and the portion closest to a boundary of the operating equipment 100 during the boundary-following process. To prevent too wide grass-leaving width due to excessive adjustment magnitude setting, affecting edge-cutting effect, an upper limit of adjustment magnitude can be set based on the grass-leaving width threshold, which is L - $d_3$ + ($d_2$ - $d_1$). The grass-leaving width threshold can be set based on cutting requirements, for example, it can be 80mm, 100mm, 120mm, 150mm, 180mm, 200mm, etc.

In some implementations, a safety distance can also be introduced to make further adjustment to the initial virtual boundary. For example, the safety distance can be a safety distance generally applicable to the initial virtual boundary as a whole, so the adjustment amount of the initial virtual boundary is "adjustment magnitude + device safety distance"; the safety distance can be a safety distance set considering the swing amplitude of the operating equipment, so the adjustment amount of the initial virtual boundary is "adjustment magnitude + swing safety distance"; the safety distance can also be a safety distance set considering braking conditions when the operating equipment moves directly towards the boundary, so the adjustment amount of initial virtual boundary is "adjustment magnitude + braking safety distance". Of course, these safety distances can also be used simultaneously with each other.

It should be understood that although the steps in the flowcharts of the drawings are shown sequentially according to the arrows, these steps are not necessarily executed sequentially according to the arrows. Unless explicitly stated in this text, there are no strict sequence restrictions on the execution of these steps, and these steps can be executed in other sequences. Moreover, at least some of the steps in the drawings can include multiple steps or multiple stages, which are not necessarily completed at the same moment, but can be executed at different moments, and the execution sequence of these steps or stages is not necessarily sequential, but can be executed alternately or alternately with at least parts of steps or stages of other steps or other steps.

Based on the same inventive concept, the embodiments of this application also provide a device for determining a working boundary of operating equipment to implement the above-mentioned methods. The solution provided by this device for solving problems is similar to the solution recorded in the above methods, so the specific limitations in one or more embodiments of the apparatus for determining working boundary of operating equipment provided below can refer to the limitations on the method for determining working boundary of operating equipment described above, which will not be repeated here.

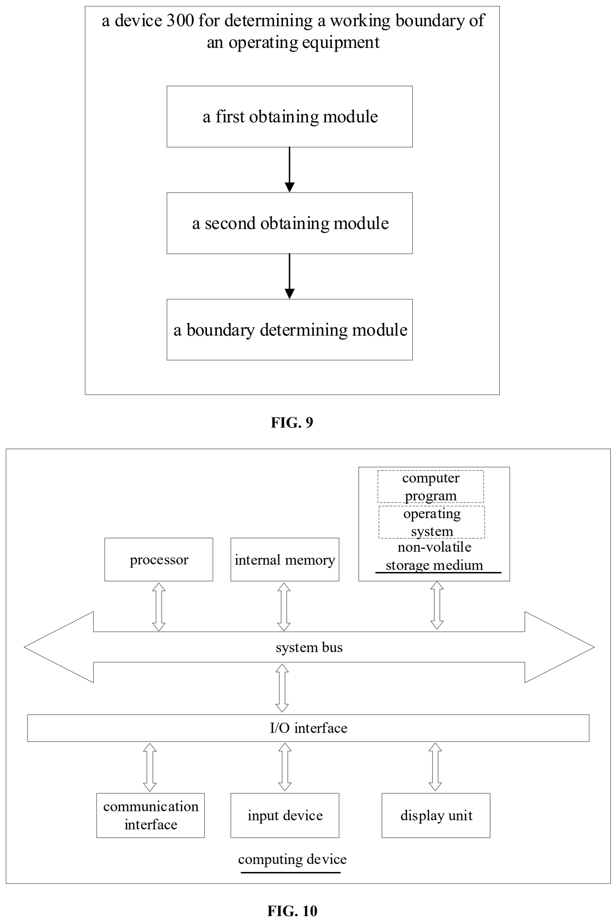

In one embodiment, as shown in FIG. 9, a device 300 for determining a working boundary of an operating equipment is provided, including:

A first obtaining module, configured to obtain an initial virtual boundary of the operating area; wherein the initial virtual boundary is generated from position data collected by a position information collection device moving along an operation boundary of the operating area, and there is a first vertical distance between a positioning device on the position information collection device and a portion closest to a boundary of the position information collection device during a boundary-following process;

A second obtaining module, configured to obtain an adjustment vector; wherein the adjustment vector points toward the interior of the operating area, and there is a second vertical distance between a positioning device on the operating equipment and a portion closest to a boundary of the operating equipment during the boundary-following process, and an adjustment magnitude of the adjustment vector is greater than or equal to an absolute value of a difference between the second vertical distance and the first vertical distance;

A boundary determining module, configured to adjust a portion of the initial virtual boundary that meets a preset condition at least according to the adjustment vector, to determine the working boundary of the operating equipment according to the adjusted initial virtual boundary.

According to the description of the previous method embodiments, this application also provides device embodiments corresponding to the methods. In various device embodiments corresponding to the methods, first module, second module, third module, etc. can be used to describe corresponding method implementation steps. For example, another embodiment of the device can also include a third obtaining module for obtaining a device safety distance corresponding to different operating equipment, correspondingly, the boundary determining module adjusting a portion of the initial virtual boundary that meets a preset condition at least according to the adjustment vector includes: adjusting a portion of the initial virtual boundary that meets a preset condition according to the adjustment vector and the device safety distance, to determine the working boundary of the operating equipment according to the adjusted initial virtual boundary. Similar to device embodiments corresponding to method(s), their overall concept and implementation method for solving technical problem(s) are the same or similar to the method(s), which will not be elaborated one by one here.

Each module in the above apparatus can be implemented entirely or partially through software, hardware and their combinations. Each module can be embedded in or independent of a processor in a computer device in hardware form, or can be stored in a memory in a computer device in software form, to facilitate the processor to call and execute operations corresponding to each module.

In another embodiment, this application also provides a computing device, which may be a terminal or system, such as a software control system of operating equipment, its internal structure diagram may be as shown in FIG. 10. The computing device includes a processor, a memory, a communication interface, a display screen and an input device connected through a system bus. The processor of the computing device is used to provide computing and control capabilities. The memory of the computing device includes a non-volatile storage medium and an internal memory. The non-volatile storage medium stores an operating system and a computer program. The internal memory provides an environment for running the operating system and the computer program in the non-volatile storage medium. The communication interface of the computing device is used for wired or wireless communication with an external terminal, the wireless communication may be implemented through WIFI, mobile cellular network, NFC (Near Field Communication) or other technologies. When the computer program is executed by the processor, a method for determining a working boundary of an operating equipment according to any method embodiment of this application is implemented. The display screen of the computing device may be a liquid crystal display (LCD) screen or an electronic ink display screen, the input device of the computing device may be a touch layer disposed over the display screen, or buttons, trackball or touchpad set on the shell of the computing device, or an external keyboard, touchpad or mouse, etc.

Those skilled in the art can understand that the structure shown in FIG. 10 is only a block diagram of parts of the structure related to the solution of this application, and does not constitute a limitation on the computing device to which the solution of this application is applied. The specific computing device may include more or fewer components than shown in the figure, or combine certain components, or have different component arrangements.

In one embodiment, this application also provides a computer-readable storage medium, storing a computer program thereon, when the computer program is executed by a processor, steps in the above method embodiments are implemented.

In one embodiment, this application also provides a computer program product, including a computer program, when the computer program is executed by a processor, steps in the above method embodiments are implemented.

Those skilled in the art can understand that implementing all or part of the processes in the above embodiment methods can be completed by instructing related hardware through computer programs. The computer program can be stored in a non-volatile computer-readable storage medium, and when executed, the computer program can include processes of the above method embodiments. Any reference to memory, database or other media used in various embodiments provided by this application can include at least one of non-volatile and volatile memory. Non-volatile memory can include Read-Only Memory (ROM), magnetic tape, floppy disk, flash memory, optical storage, high-density embedded non-volatile memory, Resistive Random Access Memory (ReRAM), Magnetoresistive Random Access Memory (MRAM), Ferroelectric Random Access Memory (FRAM), Phase Change Memory (PCM), graphene memory, etc. Volatile memory can include Random Access Memory (RAM) or external high-speed cache memory, etc. As illustration rather than limitation, RAM can be in various forms, such as Static Random Access Memory (SRAM) or Dynamic Random Access Memory (DRAM), etc. The databases involved in various embodiments provided by this application can include at least one of relational databases and non-relational databases. Non-relational databases can include blockchain-based distributed databases, etc., not limited to these. The processors involved in various embodiments provided by this application can be general processors, central processors, graphics processors, digital signal processors, programmable logic devices, quantum computing-based data processing logic devices, etc., not limited to these.

According to the description of the previous method embodiments, through the aforementioned method for determining a working boundary of an operating equipment, the collision risk during actual boundary-following process can be reduced, helping an operating equipment without a boundary line determine highly reliable working boundaries. However, after determining the working boundary of the operating equipment based on the previous method, due to possible size difference between an operating equipment and a mapping device, possible size difference between different operating equipment, unknown correspondence between a working boundary and an operating equipment, etc., it may lead to a collision between an operating equipment and a boundary when actually controlling operating equipment for a boundary-following work. For example, in an actual operation, although an adjustment vector for the initial virtual boundary in determining a working boundary is known, due to size differences between operating equipment and mapping device(s), the vertical distance between a portion closest to a boundary of operating equipment and the boundary during boundary-following work cannot be determined, which may result in the vertical distance between a portion closest to a boundary of the operating equipment and the boundary being less than a preset safety distance during boundary-following work, thereby leading to collision(s) between the operating equipment and boundary during a boundary-following process.

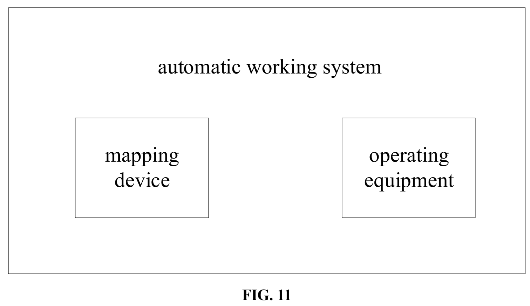

Based on this, the embodiments of this application also provide an automatic working system to reduce a collision risk during actual boundary-following process of an operating equipment. As shown in FIG. 11, the automatic working system provided by this application includes a mapping device and an operating equipment, wherein:

The mapping device is configured to record a movement trajectory while moving along an operation boundary of the operating area, for generating a working boundary of the operating equipment; wherein the mapping device includes wheels;

The operating equipment is configured to process a surface of the operating area along the working boundary; wherein during a movement along the working boundary, an outer side of the wheel closest to a boundary of the operating equipment is substantially flush with an outer side of the wheel closest to a boundary of the mapping device when the movement trajectory is recorded.

In an embodiment, the mapping device can be a device carrying a positioning device, such as a movable device carrying a positioning device (for example, an automatic lawn mower, an automatic snow sweeper, an automatic floor sweeper, or a small cart, etc.), the aforementioned portable device carrying a positioning device (for example, the aforementioned position information collection device), etc. As shown in FIG. 1, by controlling the mapping device to move along the operation boundary (B0) of the operating area (such as lawn) to record a movement trajectory (B1). The operating area can be lawn(s), etc. The operation boundary can be understood as a physical boundary of the operating area, that is, an actual boundary. The movement trajectory can be understood as a trajectory generated from position data recorded by the positioning device on the mapping device during the process of the mapping device moving along the physical boundary of the operating area, that is, the aforementioned initial virtual boundary. The working boundary can be understood as a path for the operating equipment during a boundary-following work.

In this embodiment, the operating equipment can refer to a device with automatic driving capability that can perform work task(s) during an automatic operation, such as processing a surface of the operating area during an automatic driving. The type(s) of operating equipment can include various kinds, and the embodiments of this application do not limit this. For example, the operating equipment can be an automatic lawn mower, an automatic snow sweeper, an automatic watering machine, an automatic leaf blower, an automatic floor sweeper, a mopping robot, a sweeping and mopping integrated robot, etc. Furthermore, the operating equipment is adapted to perform one or more work tasks within the operating area. For example, when the operating equipment is an automatic lawn mower, it can perform mowing tasks in the operating area; when the operating equipment is an automatic snow sweeper, it can perform snow sweeping tasks in the operating area; when the operating equipment is an automatic watering machine, it can perform watering tasks in the operating area; when the operating equipment is an automatic leaf blower, it can perform leaf blowing tasks in the operating area; when the operating equipment is an automatic floor sweeper, it can perform sweeping tasks in the operating area; when the operating equipment has both cutting components and watering components, it can perform both mowing tasks and watering tasks in the operating area, and so on. It should be noted that the mapping device and operating equipment can be the same device or different devices.

In the embodiments of this specification, during a movement along the working boundary, by controlling the outer side of the wheel closest to a boundary of the operating equipment to be substantially flush with the outer side of the wheel closest to a boundary of the mapping device when recording movement trajectory, the collision risk during actual boundary-following process can be reduced, while also reducing unmowed grass areas caused by boundary inward retraction, improving cutting efficiency.

To make the above objectives, features and advantages of this application more obvious and easier to understand, detailed description of specific implementations of the automatic working system provided by this application will be made with reference to the drawings. Many specific details are described below to facilitate full understanding of the present invention. However, this application can be implemented in many different ways other than those described herein, and those skilled in the art can make similar improvements without departing from the essence of this invention, therefore this invention is not limited by the specific embodiments disclosed below.

In some embodiments, if the mapping device is a small cart, it can be pushed to move along the operation boundary of the operating area, and position data can be recorded through the positioning device during movement to obtain movement trajectory. Specifically, when recording movement trajectory, a user can choose a small cart carrying a positioning device, and obtain position data of the lawn edge by pushing this small cart along the perimeter of the lawn. For example, when there is a wide road surface outside the lawn, the longitudinal center axis of the positioning device can be aligned with the boundary line between the road surface and the lawn while pushing the small cart. When there are walls or fences outside the lawn, the portion closest to a boundary of the small cart during boundary-following can be basically in contact with (but without obvious interaction force) the walls or fences while pushing the small cart. When there is ground with height difference outside the lawn (such as lower steps, pools, etc.), the portion closest to a boundary of the small cart during boundary-following can be basically in contact with the edge of the lawn while pushing the small cart.

In other embodiments, if the mapping device is a self-moving device (such as a lawn mower), it can be controlled to move along the operation boundary of the operating area, and position data can be recorded through the positioning device during movement to obtain movement trajectory. To ensure more accurate position data recorded by the self-moving device, a user can control the self-moving device to move along the operation boundary of the operating area while staying within a certain distance range from the self-moving device. This way, by recording position data under user monitoring, it can prevent the self-moving device from leaving the operating area or getting too far from the operation boundary, thereby improving the accuracy of recorded data while ensuring safety. Of course, the above is just an exemplary explanation of ways to generate movement trajectory, and this specification does not limit this.

Since mapping devices are generally smaller in size (to facilitate flexible control when a user push), it tends to cause differences in the distance between the positioning device and the boundary during mapping and boundary-following work processes. After obtaining the movement trajectory, if the operating equipment still works along the boundary according to the initially recorded movement trajectory, the operating equipment usually tends to collide with surrounding objects. Based on this, in some embodiments, after the mapping device records the movement trajectory, the aforementioned method for determining working boundary of operating equipment can be used to convert the movement trajectory recorded by the mapping device into a path (i.e., working boundary) for the operating equipment's boundary-following work, so that the operating equipment can subsequently perform boundary-following work based on this working boundary. It should be noted that the process of converting the movement trajectory recorded by the mapping device into a working boundary through the method for determining working boundary of operating equipment can refer to the embodiments of the aforementioned method for determining working boundary of operating equipment, which will not be repeated here.

In the embodiments of this specification, after obtaining the movement trajectory, by using the above method for determining working boundary of operating equipment to convert the movement trajectory, generating working boundary of the operating equipment can effectively improve the problem of collision tendency during boundary-following process, thereby facilitating the establishment of highly reliable working boundaries for an operating equipment without a boundary line.

In some embodiments, after generating the working boundary, the operating equipment can process the surface of the operating area according to the working boundary. Specifically, if the operating equipment is a robotic vacuum cleaner, processing the surface of the operating area can include cleaning carpets, etc. If the operating equipment is an automatic lawn mower, processing the surface of the operating area can include cutting grass in the lawn, edging, etc. Of course, the above is just an exemplary explanation and does not constitute a limitation on other embodiments of this specification.

After determining a working boundary of an operating equipment based on the previous method, due to possible size difference between an operating equipment and a mapping device, possible size difference between different operating equipment, unknown correspondence between a working boundary and an operating equipment, etc., it may lead to a collision between an operating equipment and a boundary when actually controlling operating equipment to process a surface of the operating area according to the working boundary. Specifically, for example, in an actual operation, first obtain the initial virtual boundary of the operating area by controlling the vertical distance between the portion closest to a boundary (such as the wheel closest to a boundary) of the mapping device (such as a small cart) and the boundary to be a1 during a boundary-following process, then determine a working boundary of an operating equipment based on the above method. After determining the working boundary of an operating equipment, because it may be unknown which operating equipment corresponds to the working boundary, and there are size differences between different operating equipment and between an operating equipment and a mapping device. Thus, although the adjustment vector for the initial virtual boundary in determining the working boundary is known, the vertical distance between the portion closest to a boundary of an operating equipment and the boundary during a boundary-following work cannot be determined (i.e., the vertical distance between the portion closest to a boundary and the boundary during the boundary-following work may be greater than or equal to the preset safety distance, or may be less than the preset safety distance). This may result in the vertical distance between the portion closest to a boundary of an operating equipment and a boundary being less than the preset safety distance during the boundary-following work, leading to a collision between an operating equipment and a boundary during the boundary-following process, or may result in the vertical distance between the portion closest to a boundary of an operating equipment and a boundary being far greater than the preset safety distance during the boundary-following work, leading to a large unmowed grass area between an operating equipment and a boundary during the boundary-following process. For example, assuming the preset safety distance is a1, if the vertical distance between the portion closest to a boundary of an operating equipment and a boundary during the boundary-following work is less than a1, it will lead to a collision between an operating equipment and a boundary during a boundary-following process; if the vertical distance between the portion closest to a boundary of an operating equipment and a boundary during the boundary-following work is far greater than a1, it will lead to a large unmowed grass area between an operating equipment and a boundary during the boundary-following process, thereby reducing cutting coverage. The preset safety distance can be set according to actual scenarios, and this application does not limit this.

Therefore, in this embodiment, during a movement along the working boundary, control the portion closest to a boundary of operating equipment to be substantially flush with the portion closest to a boundary of the mapping device when recording movement trajectory.

Usually wheels are located on the outermost side of devices or equipment (as shown in FIG. 3, rear wheel group 122 of operating equipment; as shown in FIG. 4, drive device 220 of position information collection device), so in some embodiments, during a movement along the working boundary, the outer side of the wheel closest to a boundary of the operating equipment can be controlled to be substantially flush with the outer side of the wheel closest to a boundary of the mapping device when recording movement trajectory.

On one hand, since recording movement trajectory is done under the premise of ensuring no collision of the mapping device, controlling the outer side of the wheel closest to a boundary of the operating equipment to be substantially flush with the outer side of the wheel closest to a boundary of the mapping device when recording movement trajectory during a movement along the operation boundary can avoid the risk of collision during actual boundary-following process of operating equipment, regardless of which operating equipment corresponds to the working boundary, how large the size differences are between different operating equipment, or how large the size differences are between operating equipment and mapping devices.

On the other hand, since the mapping device records movement trajectory under the premise of reducing a unmowed grass area, controlling the outer side of the wheel closest to a boundary of the operating equipment to be substantially flush with the outer side of the wheel closest to a boundary of the mapping device when recording movement trajectory during a movement along the operation boundary can reduce a unmowed grass area between an operating equipment and a boundary during a boundary-following process and improve cutting coverage, regardless of which operating equipment corresponds to the working boundary, how large the size difference are between different operating equipment, or how large the size difference are between the operating equipment and the mapping device.

Furthermore, since the comparison relationship between the outer sides of wheel closest to a boundary is relatively intuitive in actual operation, controlling the outer side of the wheel closest to a boundary of the operating equipment to be substantially flush with the outer side of the wheel closest to a boundary of the mapping device when recording movement trajectory during a movement along the operation boundary is relatively easy to implement, thereby enabling efficient control of the operating equipment.

In this specification embodiment, since the outer side of the wheel closest to a boundary of the operating equipment remains substantially flush with the outer side of the wheel closest to a boundary of the mapping device when recording a movement trajectory during the operating equipment's movement along the working boundary, compared to directly controlling the operating equipment to move along the working boundary after determining the working boundary, a collision risk during the boundary-following movement can be reduced, and at the same time, an unmowed grass area caused by inward retraction can be reduced, thereby improving cutting coverage.

It should be noted that terms like "first," "second," etc. in the specification, claims, and above drawings of this application are used to distinguish similar objects and not necessarily to describe specific order or sequence. It should be understood that such data can be interchanged under appropriate circumstances to enable the embodiments of this application described here to be implemented in orders other than those illustrated or described here. The exemplary embodiments described in the following example embodiments do not represent all implementations consistent with this application. Instead, they are merely examples of apparatus and methods consistent with some aspects of this application as detailed in the attached claims. The terms "include," "contain" or any other variants thereof are intended to cover non-exclusive inclusion, such that a process, method, product, or device that includes a series of elements includes not only those elements but also other elements not explicitly listed, or elements inherent to such process, method, product, or device. Without more limitations, the existence of additional identical or equivalent elements in the process, method, product, or device that includes the stated elements is not excluded. For example, if words like first, second, etc. are used to indicate names, they do not indicate any specific order.

In this application, when an element is referred to as being "fixed to" another element, it can be directly on another element or there may be intermediate elements present. When an element is considered to be "connected" to another element or "interconnected" with another element, it can be directly connected to another element or there may be intermediate elements simultaneously, and should be broadly understood, for example, it can be fixed connection, detachable connection, or integral connection; it can be mechanical connection or electrical connection. For ordinary technicians in the field, the specific meaning of these terms in this invention can be understood according to specific situations.

Terms used in this text such as "vertical," "horizontal," "left," "right," "up," "down," "front," "back," "circumferential," "travel direction" and similar expressions are based on the orientation or positional relationships shown in the drawings, are only for convenience of description and simplification of description, and do not indicate or imply that the referred devices or elements must have specific orientation, be constructed and operated in specific orientation, therefore cannot be understood as limitations on this invention.

Unless otherwise defined, technical and scientific terms used in this text can have the same meanings as commonly understood by technicians in the technical field of this invention. Terms used in the specification of this invention are only for the purpose of describing specific embodiments and are not intended to limit this invention. Terms used in this text such as "and/or," "at least one of" include any and all combinations of one or more of the listed related items.

The technical features in the above embodiments can also be combined arbitrarily. For brevity of description, not all possible combinations of technical features in the above embodiments have been described, however, as long as these technical feature combinations do not have contradictions, they should all be considered as within the scope recorded in this specification.

The above-described embodiments only express several implementation methods of this application, their descriptions are relatively specific and detailed, but cannot therefore be understood as limitations on the patent scope of this application. It should be pointed out that for ordinary technicians in the field, without departing from the concept of this application, several modifications and improvements can still be made, which all belong to the protection scope of this application. Therefore, the protection scope of this application should be based on the attached claims.

## Claims

1. A method for determining a working boundary of an operating equipment, wherein the operating equipment is adapted to perform at least one work task in an operating area, wherein the method comprises:

   obtaining an initial virtual boundary of the operating area; wherein the initial virtual boundary is generated from position data collected by a position information collection device moving along an operation boundary of the operating area, and there is a first vertical distance between a positioning device on the position information collection device and a portion closest to a boundary of the position information collection device during a boundary-following process;
   obtaining an adjustment vector; wherein the adjustment vector points toward the interior of the operating area, and there is a second vertical distance between a positioning device on the operating equipment and a portion closest to a boundary of the operating equipment during the boundary-following process, and an adjustment magnitude of the adjustment vector is greater than or equal to an absolute value of a difference between the second vertical distance and the first vertical distance;
   adjusting a portion of the initial virtual boundary that meets a preset condition at least according to the adjustment vector;
   determining the working boundary of the operating equipment according to the adjusted initial virtual boundary.

2. The method according to claim **1,** wherein the adjusting a portion of the initial virtual boundary that meets a preset condition at least according to the adjustment vector comprises:

   obtaining a marked initial virtual boundary of the initial virtual boundary; wherein the marked initial virtual boundary is at least used to indicate an initial virtual boundary with a collision risk;
   adjusting the marked initial virtual boundary at least according to the adjustment vector.

3. The method according to claim 1, the adjustment vector is pre-stored in a memory, wherein the obtaining the adjustment vector for the initial virtual boundary comprises: retrieving the adjustment vector for the initial virtual boundary from the memory.

4. The method according to claim 3, wherein the memory is set in one or more of the following devices: the position information collection device, the operating equipment, a terminal device, a cloud server.

5. The method according to claim 1, wherein:

   the first vertical distance is determined at least based on a first installation position of the positioning device on the position information collection device and a width of the position information collection device;
   the second vertical distance is determined at least based on a second installation position of the positioning device on the operating equipment and a width of the operating equipment.

6. The method according to claim 5, wherein the first installation position is located on a longitudinal center symmetry plane of the position information collection device, the second installation position is located on a longitudinal center symmetry plane of the operating equipment, and the adjustment vector is determined at least based on a width difference between the position information collection device and the operating equipment.

7. The method according to claim 5, wherein the obtaining the adjustment vector for the initial virtual boundary comprises:

   obtaining a first width of the position information collection device and a second width of the operating equipment;
   determining the first vertical distance according to the first installation position and the first width;
   determining the second vertical distance according to the second installation position and the second width;
   determining the adjustment magnitude of the adjustment vector according to the first vertical distance and the second vertical distance.

8. The method according to claim **1,** wherein the adjusting a portion of the initial virtual boundary that meets a preset condition at least according to the adjustment vector comprises:

   obtaining a portion of the initial virtual boundary where a satellite positioning signal output by the positioning device on the position information collection device during the boundary-following process fails to satisfy a quality condition;
   obtaining a shadow area compensation vector for the portion of the initial virtual boundary; wherein the shadow area compensation vector points toward the interior of the operating area;
   determining the working boundary of the operating equipment corresponding to the portion of the initial virtual boundary according to the initial virtual boundary, the adjustment vector, and the shadow area compensation vector.

9. The method according to claim 8, wherein a compensation magnitude of the shadow area compensation vector is determined at least based on a positioning deviation amount of the positioning device on the operating equipment in a shadow area.

10. The method according to claim 1, wherein the adjustment magnitude is determined at least based on the following relation:

$$d_2 - d_1 \leq |D_{in}| \leq L - d_3 + (d_2 - d_1);$$

wherein $|D_{in}|$ represents the adjustment magnitude, $d_1$ represents the first vertical distance, $d_2$ represents the second vertical distance, $d_3$ represents a third vertical distance between an outermost edge of an operating tool of the operating equipment and the portion closest to a boundary of the operating equipment during the boundary-following process, L represents a grass-leaving width threshold at the operation boundary.

11. A method for determining a working boundary of an operating equipment, wherein the operating equipment is adapted to perform at least one work task in an operating area, and the operating equipment is provided with a detachable positioning device, the positioning device is configured to be coupled with another mobile device in a detached state to move and collect position data of an operation boundary of the operating area, wherein the method comprises:

obtaining an initial virtual boundary of the operating area; wherein the initial virtual boundary is generated from the collected position data of the operation boundary of the operating area, and during a collection process, there is a first vertical distance between the positioning device and a portion closest to a boundary of the mobile device;
obtaining an adjustment vector; wherein the adjustment vector points toward the interior of the operating area, and there is a second vertical distance between the positioning device on the operating equipment and a portion closest to a boundary of the operating equipment during a boundary-following process, and an adjustment magnitude of the adjustment vector is greater than or equal to an absolute value of a difference between the second vertical distance and the first vertical distance;
adjusting a portion of the initial virtual boundary that meets a preset condition at least according to the adjustment vector;
determining the working boundary of the operating equipment according to the adjusted initial virtual boundary.

12. A device for determining a working boundary of an operating equipment, wherein the operating equipment is adapted to perform at least one work task in an operating area, wherein the device comprises:

a first obtaining module, configured to obtain an initial virtual boundary of the operating area; wherein the initial virtual boundary is generated from position data collected by a position information collection device moving along an operation boundary of the operating area, and there is a first vertical distance between a positioning device on the position information collection device and a portion closest to a boundary of the position information collection device during a boundary-following process;
a second obtaining module, configured to obtain an adjustment vector; wherein the adjustment vector points toward the interior of the operating area, and there is a second vertical distance between a positioning device on the operating equipment and a portion closest to a boundary of the operating equipment during the boundary-following process, and an adjustment magnitude of the adjustment vector is greater than or equal to an absolute value of a difference between the second vertical distance and the first vertical distance;
a boundary determining module, configured to adjust a portion of the initial virtual boundary that meets a preset condition at least according to the adjustment vector, to determine the working boundary of the operating equipment according to the adjusted initial virtual boundary.

13. A computing device, comprising a memory and a processor, wherein the memory stores a computer program, wherein when the processor executes the computer program, steps of the method according to any one of claims 1 to 11 are implemented.

14. A computer-readable storage medium, storing a computer program thereon, wherein when the computer program is executed by a processor, steps of the method according to any one of claims 1 to 11 are implemented.

15. A computer program product, comprising a computer program, wherein when the computer program is executed by a processor, steps of the method according to any one of claims 1 to 11 are implemented.

**16.** An automatic working system, wherein, comprising:
a mapping device and an operating equipment,

the mapping device, configured to record a movement trajectory while moving along an operation boundary of an operating area, for generating a working boundary of the operating equipment; wherein the mapping device comprises wheels;

the operating equipment, configured to process a surface of the operating area along the working boundary; wherein during a movement along the working boundary, an outer side of a wheel closest to a boundary of the operating equipment is substantially flush with an outer side of a wheel closest to a boundary of the mapping device when the movement trajectory is recorded.

**FIG. 1**

obtaining an initial virtual boundary of the operating area — S200

obtaining an adjustment vector — S400

adjusting a portion of the initial virtual boundary that meets a preset condition at least according to the adjustment vector — S600

determining the working boundary of the operating equipment according to the adjusted initial virtual boundary — S800

**FIG. 2**

121(120)     122(120)

100

d3

140
130

H1

110

**FIG. 3**

200     210

230     220

240

H2

**FIG. 4**

B1

B01

200

d1

**FIG. 5**

（a）

B1

B01

100

✗

（b）

B2

B1

B01

Din

100

d2

✓

**FIG. 6**

FIG. 7

FIG. 8

a device 300 for determining a working boundary of an operating equipment

a first obtaining module

a second obtaining module

a boundary determining module

**FIG. 9**

computer program

operating system

non-volatile storage medium

processor

internal memory

system bus

I/O interface

communication interface

input device

display unit

computing device

**FIG. 10**

automatic working system

mapping
device

operating
equipment

**FIG. 11**

# INTERNATIONAL SEARCH REPORT

| International application No. |
|---|
| **PCT/CN2023/143260** |

**A. CLASSIFICATION OF SUBJECT MATTER**

G05D1/00(2024.01)i; A01D34/00(2006.01)i

According to International Patent Classification (IPC) or to both national classification and IPC

**B. FIELDS SEARCHED**

Minimum documentation searched (classification system followed by classification symbols)

IPC:G05D A01D

Documentation searched other than minimum documentation to the extent that such documents are included in the fields searched

Electronic data base consulted during the international search (name of data base and, where practicable, search terms used)

CNABS; CNTXT; CNKI; VEN; WOTXT; EPTXT; USTXT; ENTXTC: 宝时得, 边界, 建图, 地图, 修订, 改正, 修正, 缩, 间距, 距离, 体积, 宽, 轮, 越界, 超出, 碰撞, boundary, limit, map, amend+, modifi+, adjust+, distance, bulk, width, wheel, exceed+

**C. DOCUMENTS CONSIDERED TO BE RELEVANT**

| Category* | Citation of document, with indication, where appropriate, of the relevant passages | Relevant to claim No. |
|---|---|---|
| PX | CN 116893665 A (POSITEC POWER TOOLS (SUZHOU) CO., LTD.) 17 October 2023 (2023-10-17) description, paragraphs [0004]-[0142], and figures 1-10 | 1-16 |
| Y | CN 109085835 A (YANGZHOU FANGLING MACHINERY CO., LTD.) 25 December 2018 (2018-12-25) description, paragraphs [0006]-[0092], and figures 1-10 | 16 |
| Y | CN 115202344 A (WILLAND (BEIJING) TECHNOLOGY CO., LTD.) 18 October 2022 (2022-10-18) description, paragraphs [0004]-[0073], and figures 1-4 | 16 |
| A | WO 2021110415 A1 (HUSQVARNA AB) 10 June 2021 (2021-06-10) entire document | 1-16 |
| A | CN 115342804 A (POSITEC POWER TOOLS (SUZHOU) CO., LTD.) 15 November 2022 (2022-11-15) entire document | 1-16 |
| A | CN 112034846 A (SHENZHEN TOPBAND CO., LTD.) 04 December 2020 (2020-12-04) entire document | 1-16 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 April 2024** | **15 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/143260**

| Patent document cited in search report | | | Publication date (day/month/year) | Patent family member(s) | Publication date (day/month/year) |
|---|---|---|---|---|---|
| CN | 116893665 | A | 17 October 2023 | None | |
| CN | 109085835 | A | 25 December 2018 | None | |
| CN | 115202344 | A | 18 October 2022 | None | |
| WO | 2021110415 | A1 | 10 June 2021 | None | |
| CN | 115342804 | A | 15 November 2022 | None | |
| CN | 112034846 | A | 04 December 2020 | None | |

Form PCT/ISA/210 (patent family annex) (July 2022)